# EUROPÄISCHE PATENTANMELDUNG

(11) **EP 1 172 872 A2**
(43) Veröffentlichungstag der Anmeldung: **16.01.2002**
(21) Anmeldenummer: 01116264.1
(22) Anmeldetag: 05.07.2001
(51) Int. Cl.: H01M 8/04, H01M 8/06

(54) **Brennstoffzellensystem mit Einrichtung zur Wasserrückgewinnung und Verfahren zum Betrieb eines solchen**

(30) Priorität: 14.07.2000 DE 10034399
(71) Anmelder: DaimlerChrysler AG, 70567 Stuttgart (DE)
(72) Erfinder: Docter, Andreas, Dr., 89077 Ulm (DE); Sommer, Marc, 89081 Ulm (DE); Agar, David, W., Prof. dr., 44229 Dortmund (DE); Gosewinkel, Martin, 59077 Hamm (DE)

(57) **Zusammenfassung**

Die Erfindung betrifft ein Verfahren zum Betrieb eines Brennstoffzellensystems, insbesondere eines solchen mit vorgeschalteter Reformierung von Kohlenwasserstoffen und/oder Alkoholen, wobei im Abluftstrom des Brennstoffzellensystems enthaltenes Wasser rückgewonnen wird. Es wird vorgeschlagen, eine Absorptionseinheit in den Abluftstrom der Brennstoffzelle zu schalten und darin absorbiertes Wasser in einer Desorptionseinheit mittels zuzuführender vorzugsweise erwärmter Luft und/oder durch Erwärmung der Glykollösung freizusetzen. Die feuchte Luft kann anschließend dem Brennstoffzellensystem oder der Reformierungseinheit wieder zugeführt werden. Hierdurch wird es möglich, das gesamte Prozeßwasser zurückzugewinnen und die Anlage mit Niederdruck zu betreiben.

## Beschreibung

Vorliegende Erfindung betrifft ein Verfahren zum Betrieb eines Brennstoffzellensystems, bei dem im Abluftstrom des Brennstoffzellensystems enthaltenes Wasser rückgewonnen wird sowie ein Brennstoffzellensystem mit einer Einrichtung zur Rückgewinnung derartigen Wassers gemäß dem Oberbegriff der Patentansprüche 1 bzw. 8.

Brennstoffzellensysteme sind beispielsweise zum Betrieb eines Elektromotors bekannt. Man unterscheidet zwischen Brennstoffzellen, denen ein Brennmittel direkt zugeführt wird, und solchen, denen Wasserstoff als Brennmittel zugeführt wird, der durch Reformierung von Kohlenwasserstoffen, wie Benzin, Diesel, Naphtha oder Alkoholen wie Methanol, gewonnen wird. Neben Brennstoff benötigt eine Brennstoffzelle Sauerstoff, der zumeist mit der Umgebungsluft zugeführt wird. Die Brennstoffzelle erzeugt durch elektrochemische Umsetzung aus anodenseitig zugeführtem Wasserstoff und kathodenseitig zugeführtem Sauerstoff Wasser und elektrische Energie. Häufig wird Wasser auch als Kühlmittel und/oder als Befeuchtungsmittel den anoden- und/oder kathodenseitigen Stoffströmen zugesetzt. Der Abluftstrom eines Brennstoffzellensystems enthält daher Wasser, auch in Form von Wasserdampf. Es existieren Vorschläge, dieses Wasser mechanisch und/oder thermisch aus dem Abluftstrom auszuscheiden und somit für den Prozeß rückzugewinnen. Hierfür geeignete Bauteile benötigen jedoch ein relativ großes Volumen oder zusätzliche Energie, wodurch der Wirkungsgrad des Systems herabgesetzt wird.

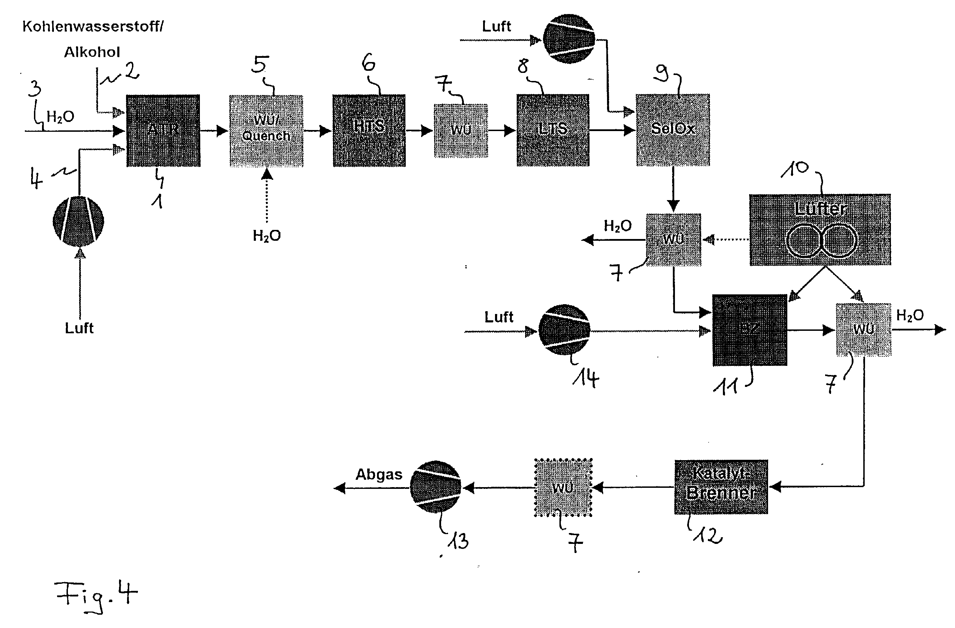

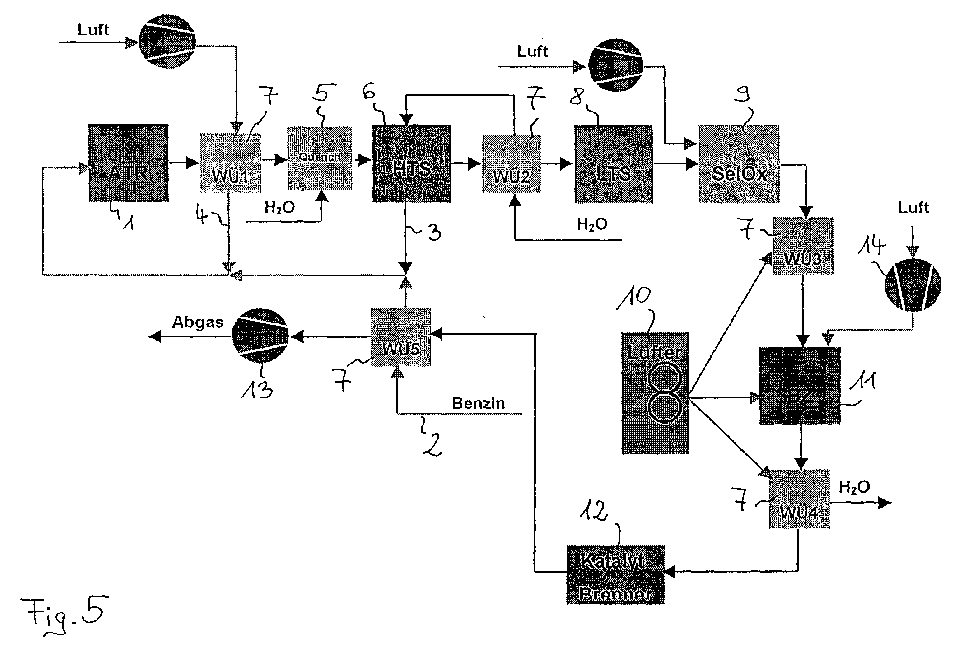

Auch für die Reformierung von Kohlenwasserstoffen wird neben Luft Wasser benötigt. Bekannte Kohlenwasserstoffreformer sind schematisch in den Figuren 4 und 5 dargestellt. Figur 4 zeigt den gängigen Aufbau eines Kohlenwasserstoffreformers und eines Brennstoffzellensystems, Figur 5 zeigt einen gemäß WO 98/08771 modifizierten Aufbau. Gleiche Bauteile sind mit gleichen Bezugsziffern bezeichnet.

Grundsätzlich wird wie in Figur 4 dargestellt, dem Reaktor 1 Kohlenwasserstoff, Luft und Wasser über die Leitungen 2, 4 bzw. 3 zugeführt. In einer chemischen Reaktion kann hieraus Kohlendioxid und Wasserstoff erzeugt werden. Je nach Mischungsverhältnis entstehen auch Kohlenmonoxidanteile, die in einer selektiven Oxidationsstufe 9 zu Kohlendioxid oxidiert werden. Die hierbei frei werdende Energie kann in Form von Wärme dem Reformierungsprozeß zugeführt werden. Entstehendes Kohlenmonoxid kann weiterhin durch die Wassergas-Shift-Reaktion in einer Hochtemperaturstufe 6 und einer Niedrigtemperaturstufe 8 mit Wasser zu Kohlendioxid und Wasserstoff umgesetzt werden. Weiterhin gibt es Konzepte, die eine schnelle Abkühlung des Reformatgases hinter dem Reformierungsreaktor 1 durch Zugabe von Wasser (Quenchen) vorsehen. Wärmeübertrager (WÜ) sind in den Figuren mit den Bezugszeichen 7 gekennzeichnet. Ein Teil des entstandenen Wassers kann vor dem Zuleiten des in der Reformierstufe entstandenen Wasserstoffs zur Brennstoffzelle 11 abgeschieden werden. Ein Lüfter 10 kann zur Kühlung der Komponenten eingesetzt werden. Dem Brennstoffzellensystem 11 wird anschließend anodenseitig Wasserstoff und kathodenseitig Luftsauerstoff über den Kompressor 14 zugeführt. Durch elektrochemische Umsetzung entsteht hieraus Wasser und elektrische Energie. Aus dem Abgas der Brennstoffzelle kann über einen Wärmeübertrager 7 Wasser abgeschieden und unverbrannter Wasserstoff über einen katalytischen Brenner 12 zu Wasser umgesetzt werden, wobei die hierbei entstehende Wärme einem Wärmeübertrager 7 zugeführt wird. Das verbleibende Restabgas wird über einen Expander 13 nach außen gefördert.

Figur 5 zeigt einen etwas modifizierten Aufbau eines Kohlenwasserstoffreformers. Bis auf die folgenden Unterschiede entspricht der Prozeßablauf hier dem in Figur 4 gezeigten. Die vom katalytischen Brenner 12 abgegebene Wärmeenergie wird im Wärmeübertrager 7 (WÜ 5) zur Verdampfung eines flüssigen Kohlenwasserstoffs wie Benzin verwendet, der über die Leitung 2 dem System zugeführt wird. Wasser wird dem System über einen Wärmeübertrager 7 (WÜ 2) zugleitet und tritt als Wasserdampf in die Hochtemperatureinheit 6 zur Wassergas-Shift-Reaktion. Aus dieser Einheit 6 austretender Wasserdampf wird über die Leitung 3 zusammen mit dem verdampften Benzin dem Reformierungsreaktor 1 zugeführt. Luft gelangt über den Wärmeübertrager 7 (WÜ 1) über die Leitung 4 zum Reformierungsreaktor 1. Weiterhin wird flüssiges Wasser für die Produktabkühlung in der Quenchstufe 5 benötigt.

Bei den beschriebenen Brennstoffzellensystemen mit vorgeschalteter Kohlenwasserstoffreformierung muß das gesamte Wasser innerhalb des Systems vollständig zurückgewonnen werden, da andernfalls bei einer mobilen Anwendung des Systems das fehlende Wasser zugetankt werden müßte. Beim stationären Einsatz ergäbe sich ein erhöhter Wasserverbrauch des Systems, der aus Gründen des Umweltschutzes und der Wirtschaftlichkeit nicht zu tolerieren ist.

Aus der US-6013385 ist die Wasserrückgewinnung aus dem Kathodenabgas einer Brennstoffzelle bekannt, wobei neben der Abscheidung von Wasser die Wasserrückgewinnung mittels eines rotierenden Adsorptionssystems oder Enthalpierades zum Einsatz kommt. Als Enthalpierad wird ein auf einer Welle gelagertes poröses Material, wie ein Molekularsieb oder Zeolith, verwendet, das von der einen Seite von feuchtem, kaltem Kathodenabgas und auf der anderen Seite von heißer Luft, die vor dem Eintritt in die Kathodenseite zusätzlich befeuchtet werden muß, durchströmt wird. Durch Drehen des Adsorptionsmaterials (Enthalpierad) wird eine kontinuierliche Adsorption und Desorption von Wasser erzielt.

Andere Konzepte sehen die Rückgewinnung des Prozeßwassers mittels Kondensation nach der Brennstoffzelle vor. Zu diesem Zweck werden im Kondensator sehr niedrige Temperaturen und/oder ein hoher Systemdruck benötigt. Hierbei treten die folgenden Schwierigkeiten auf. Kondensationstemperaturen unter 55° C sind bei mobilen Anwendungen nur schwer realisierbar, da die Fahrzeuge auch bei Außentemperaturen von mehr als 40° C fahrtüchtig sein müssen und die erforderlichen Fahrzeugkühler in diesem Fall sehr aufwendig konstruiert werden müssen (Zunahme der Baugröße). Auf der anderen Seite kann durch Erhöhung des Systemdrucks die benötigte Kondensationstemperatur erhöht werden. Um den erforderlichen Systemdruck aufzubringen, werden jedoch Kompressoren benötigt, die einen Teil der in der Brennstoffzelle erzeugten elektrischen Energie wieder aufzehren. Dieser Anteil kann auch durch eine Expansionsmaschine nur teilweise zurückgewonnen werden, so daß sich insgesamt eine Herabsetzung des Systemwirkungsgrades ergibt. Schließlich muß insbesondere für den Start des Systems das Prozeßwasser in einem Tank gespeichert werden. Hier ergeben sich bei niedrigen Außentemperaturen Probleme hinsichtlich der Frostsicherheit.

Aufgabe vorliegender Erfindung ist es, die oben beschriebenen Probleme im Stand der Technik zu lösen und ein Brennstoffzellensystem, insbesondere mit vorgeschalteter Reformierung für Kohlenwasserstoffe und/oder Alkohole, anzugeben, das bei Niederdruck (Atmosphärendruck) betrieben werden kann, und das auf eine externe Wasserzufuhr möglichst vollständig verzichtet.

Diese Aufgabe wird erfindungsgemäß durch die Merkmale der Patentansprüche 1 bzw. 8 gelöst. Vorteilhafte Ausgestaltungen ergeben sich aus den jeweiligen Unteransprüchen.

Erfindungsgemäß wird das in der feuchten Abluft des Brennstoffzellensystems enthaltene Wasser mittels Absorption aus dem Abluftstrom entfernt und durch anschließende Desorption wieder freigesetzt. Das freigesetzte Wasser kann ganz oder teilweise dem Prozeß wieder zugeführt werden. Hierzu ist erfindungsgemäß eine Absorptions- und eine Desorptionseinheit vorgesehen, wobei die Absorptionseinheit in die Abgasleitung des Brennstoffzellensystems geschaltet ist, so daß das im Abgas enthaltene Wasser vom Absorptionsmittel der Absorptionseinheit aufgenommen werden kann. Eine Desorptionseinheit, die das mit Wasser beladene Absorptionsmittel enthält, ist zur Rückführung des desorbierten Wasser mit dem Brennstoffzellensystem verbunden.

Die erfindungsgemäße Wasserrückgewinnung mittels Absorption/Desorption erlaubt eine nahezu vollständige Rückgewinnung des im Prozeß verbrauchten Wassers, ohne daß eine Erhöhung des Systemdrucks notwendig wäre. Somit kann auf eine externe Wasserzufuhr nahezu vollständig verzichtet werden, eine wesentliche Voraussetzung für den Einsatz der Brennstoffzellensysteme in mobilen Systemen. Weiterhin kann auf einen Verdichter verzichtet werden, was eine erhöhte Kompaktheit des Systems bei gleichzeitiger Kostenreduzierung zur Folge hat. Schließlich kann bei Wahl eines geeigneten Absorptionsmittels eine vollständige Rückgewinnung des absorbierten Wassers im anschließenden Desorptionsprozeß erreicht werden.

Als ein besonders vorteilhaftes Absorptionsmittel hat sich Glykol erwiesen, wobei insbesondere Ethylenglykol, Diethylenglykol oder Triethylenglykol geeignete Absorptionsmittel darstellen. Eine Mischung eines oder mehrerer der genannten Glykole mit Wasser in einem bestimmten Gewichtsverhältnis erweist sich als besonders geeignet, Wasser physikalisch zu absorbieren. Aus derartigen mit Wasser beladenen Glykollösungen läßt sich Wasser aufgrund der großen Siedepunktspreizung von Glykol und Wasser leicht separieren. Gpünstig ist ein Gewichtsverhältnis, das zwischen 0-60 Gew.% Glykol und 0-40 Gew.% Wasser liegt.

Zur Desorption wird geeigneterweise aus der Umgebung angesaugte Luft verwendet, die bei Bedarf erwärmt werden kann. Es ist auch eine Erhöhung der Lösungstemperatur zur Desorption des Wassers möglich. Es kann jedoch auch oder alternativ die Glykollösung erwärmet werden.

Es ist vorteilhaft, das rückgewonnene Wasser einem Reformer für Kohlenwasserstoffe und/oder Alkohole zuzuführen, der das Brennmittel für die Brennstoffzelle erzeugt. Hierzu kann der Desorptionseinheit warme, trockene Luft zugeführt werden, die die Desorptionseinheit unter Abgabe eines Teils ihrer Wärme und unter Aufnahme des darin enthaltenen Wassers verläßt. Die warme und feuchte Luft wird dann dem Reformierungsreaktor zugeführt.

Die Reformierung kann dabei mit Luft oder Wasser oder auch mit einem Luft/Wassergemich erfolgen.

Absorptions- und Desorptionseinheit sind mit Vorteil derart kombiniert, daß das Absorptionsmittel im Kreislauf gefahren wird, das heißt, das Absorptionsmittel verläßt den Desorber im regenerierten Zustand und tritt wieder in den Absorber ein. Nach Erreichen eines bestimmten Sättigungsgrades wird das Absorptionsmittel wieder in den Desorber geleitet.

Dieser Prozeß kann kontinuierlich oder getaktet, ein- oder mehrstufig erfolgen und ist entsprechend dem jeweiligen Anforderungsprofil im Einsatz zu optimieren.

Als besonders geeignet erweist sich die Verwendung eines Zentrifugalreaktors, in dem sehr hohe Stoffübergangskoeffizienten erzielt werden können. Hierdurch kann die Größe der Absorptions-/Desorptionseinheit verringert werden. Derartige Zentrifugalreaktoren finden sich in den Patenten US-4283255 und US-4400275 beschrieben. Sie lassen sich allgemein zum Stoffaustausch zwischen zwei Fluiden einsetzen. Hierzu wird eine flüssige Phase nahe der Rotationsachse des Zentrifugalreaktors in diesen eingeleitet, wobei die Flüssigkeit eine mit einer permeablen Packung gefüllten und um die Rotationsachse rotierenden Raum aufgrund der auftretenden Zentrifugalkräfte durchdringt. In den den rotierenden Raum umgebenden Außenraum wird eine gasförmige Phase eingeleitet, die die Flüssigkeit im Gegenstrom durchdringt und durch eine Ableitung nahe der Rotationsachse des Reaktors diesen verläßt.

Bei vorliegender Erfindung kann ein derartiger Zentrifugalreaktor sowohl für die Absorption als auch für die Desorption verwendet werden. Im Falle der Absorption wird dem Zentrifugalreaktor als flüssige Phase das Absorptionsmittel (Glykol) und im Gegenstrom hierzu das feuchte Brennstoffzellenabgas als gasförmige Phase zugeführt. Im Falle der Desorption wird das mit Wasser beladene Absorptionsmittel als Flüssigkeit und ein aufgewärmter Luftstrom als Gas dem Zentrifugalreaktor zugeführt. Es ist auch möglich, eine Flush-Kammer, ein Zyklon oder dergl. einzusetzen.

Die Erfindung und deren Vorteile werden im folgenden durch ein Ausführungsbeispiel anhand der Zeichnungen illustriert.
- Fig. 1: zeigt schematisch eine Ausführungsform der erfindungsgemäßen Einrichtung zur Wasserrückgewinnung in einem Brennstoffzellensystem.
- Fig. 2: zeigt schematisch eine Anlage zur Reformierung von Kohlenwasserstoff und/oder Alkohol mit den wesentlichen Elementen einer erfindungsgemäßen Einrichtung zur Wasserrückgewinnung aus dem Abgasstrom eines Brennstoffzellensystems.
- Fig. 3: zeigt eine schematische Skizze eines Zentrifugalreaktors, der als Absorptions- und Desorptionseinheit dienen kann.
- Fig. 4: ist eine schematische Darstellung eines bekannten Kohlenwasserstoffreformers, der bereits oben beschrieben wurde.
- Fig. 5: zeigt schematisch eine abgewandelte Form eines Reformers für Kohlenwasserstoffe und/oder Alkohole, der bereits oben abgehandelt ist.

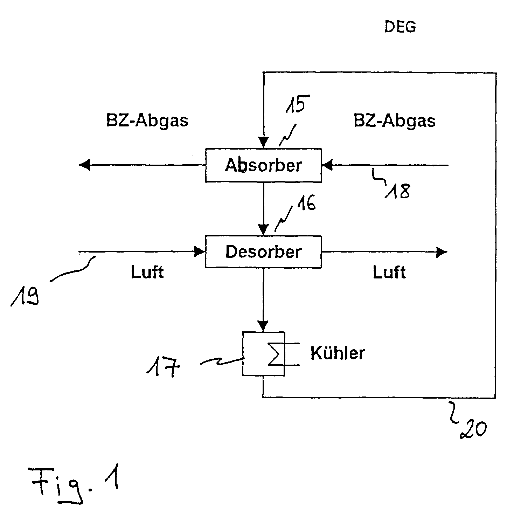

Eine mögliche Ausführungsform einer erfindungsgemäßen Einrichtung zur Rückgewinnung von Wasser in einem Niederdruck-Brennstoffzellensystem zeigt Figur 1. Zur Wasserrückgewinnung dienen erfindungsgemäß eine Absorptionseinheit 15 und eine Desorptionseinheit 16. Als Absorptionsmittel wird in diesem Beispiel eine Glykollösung bestehend aus einer Mischung aus Di- oder Triethylenglykol und Wasser verwendet. Das Absorptionsmittel wird über die Leitung 20 im Kreislauf geführt. Der feuchte Abluftstrom des Brennstoffzellensystems (BZ-Abgas) wird über Leitung 18 in die Absorptionseinheit 15 eingeleitet. Das darin enthaltene Wasser wird unter freiwerdender Absorptionsenergie von der Glykollösung physikalisch absorbiert. Die frei werdende Energie überträgt sich als Wärme auf den Abluftstrom, der trocken und erwärmt die Absorptionseinheit 15 verläßt. Mit Wasser beladene Glykollösung wird über die Kreislaufleitung 20 der Desorptionseinheit 16 zugeführt. Als Desorptionsmittel wird Luft über die Leitung 19 in die Desorptionseinheit 16 geleitet, die unter Abgabe der notwendigen Desorptionsenergie absorbiertes Wasser freisetzt und aus der Desorptionseinheit 16 austrägt. Daher ist es sinnvoll, heiße und trockene Luft über die Leitung 19 zuzuführen. Die die Desorptionseinheit 16 verlassende feuchte Luft kann nunmehr dem Brennstoffzellensystem oder einem vorgeschalteten Reformierungsreaktor wieder zugeleitet werden. Die beim Desorptionsprozeß erwärmte Glykollösung wird über die Leitung 20 durch einen Kühler 17 geführt, um anschließend wieder in die Absorptionseinheit 15 einzutreten.

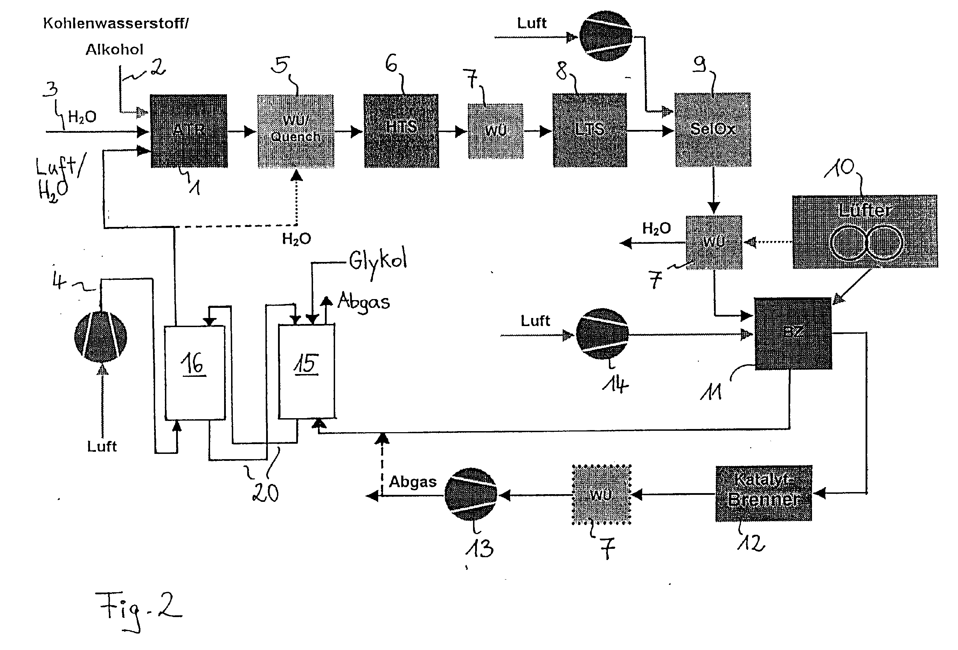

Figur 2 zeigt eine erfindungsgemäße Einrichtung zur Wasserrückgewinnung, die in ein Brennstoffzellensystem mit einer Reformierstufe für Kohlenwasserstoffe und/oder Alkohole integriert ist. Figur 2 stützt sich auf die bereits behandelte Figur 4, so daß auf die dortigen Erläuterungen verwiesen wird, um unnötige Wiederholungen zu vermeiden. Gleiche Bauteile sind mit gleichen Bezugsziffern versehen.

Das aus dem Brennstoffzellensystem 11 anodenseitig austretende Abgas, das unter anderem Reste von unverbranntem Wasserstoff (ca. 20% der ursprünglichen Menge an Wasserstoff) sowie eventuell Kühlwasser enthält, wird im katalytischen Brenner 12 katalytisch zu Wasser umgesetzt, wobei die frei werdende Wärme für den Prozeß nutzbar ist und einem Wärmeübertrager 7 zugeführt werden kann. Der kathodenseitige, Wasser enthaltende Abgasstrom wird erfindungsgemäß einer Absorptionseinheit 15 zugeführt, die vorzugsweise mit einer Glykollösung gefüllt ist. Die Glykollösung kann über die Leitung 20 im Kreislauf geführt werden, wobei die mit Wasser beladene Glykollösung in die Desorptionseinheit 16 geleitet wird. Das vom Wasser befreite Abgas tritt über eine Abgasleitung aus der Absorptionseinheit 15 aus.

Zur Desorption der mit Wasser beladenen Glykollösung wird ein aus der Umgebung angesaugter Luftstrom verwendet, der über die Leitung 4 in die Desorptionseinheit 16 eintritt. Zur Unterstützung der Desorption kann die Luft und/oder die Glykollösung erwärmt werden. Die mit Wasserdampf beladene Luft wird dem Reformierungsreaktor 1 zugeleitet, außerdem kann zurückgewonnenes Wasser für den Quenchprozeß in der Einheit 5 verwendet werden. Außerdem ist es möglich, das Abgas aus der katalytischen Nachverbrennung zusammen mit dem Abgas aus der Brennstoffzelle der Absorptionseinheit 15 zuzuführen.

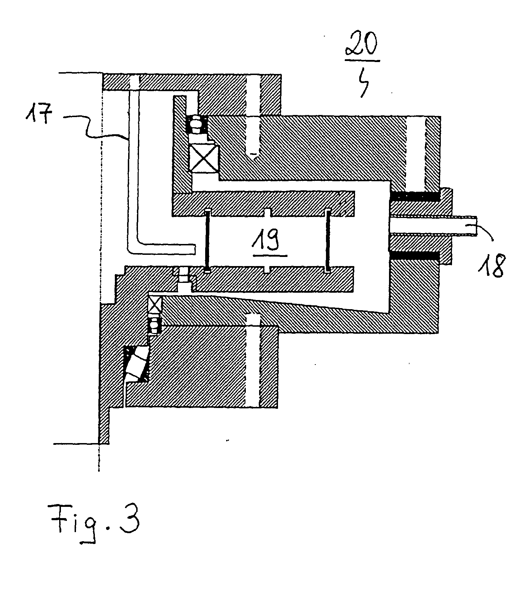

Figur 3 stellt stark vereinfacht einen Zentrifugalreaktor dar, der sowohl als Absorptionseinheit 15 wie auch als Desorptionseinheit 16 beim erfindungsgemäßen Verfahren Einsatz finden kann. Flüssigkeit wird über die Zuleitung 17 nahe der Rotationsachse in das Innere des Zentrifugalreaktors 20 eingeleitet. Aufgrund der Zentrifugalkräfte wird die Flüssigkeit fein verteilt und durchdringt den Raum 19 für verschiedene Packungen, wie beispielsweise Glaskugeln. Hierdurch wird die Verweilzeit verringert und die Kontaktoberfläche erhöht und somit der Stofftransportwiderstand herabgesetzt. Gas wird über die Zuleitung 18 im Gegenstrom zur Flüssigkeit in das Innere des Reaktors eingedüst. Der Gas-Flüssig-Gegenstrom ermöglicht einen hohen Stoffaustausch. Für die Absorption wird flüssiges Absorptionsmittel, wie die erwähnten Glykollösungen, über die Leitung 17 in das Innere des Zentrifugalreaktors 20 eingeleitet. Die Glykollösung durchdringt fein verteilt aufgrund der Zentrifugalkräfte die Packungen, vorzugsweise bestehend aus Glaskugeln, während durch die Leitung 18 zugeführtes Gas im Gegenstrom die Flüssigkeit durchdringt. Die innige Stoffdurchmischung bewirkt, daß im Gasstrom vorhandenes Wasser von der Flüssigkeit aufgenommen, das heißt vorzugsweise physikalisch absorbiert wird. Die Absorption kann auch chemisch sein. Die Ausgestaltung der Absorptionseinheit 15 als Zentrifugalreaktor 20 hat den Vorteil der besseren Stoffdurchmischung und damit eines höheren Absorptionsgrades bei gleichzeitig kleineren Bauteilabmessungen.

Bei Verwendung eines Zentrifugalreaktors 20 als Desorptionseinheit 16 wird in analoger Weise beladenes Absorptionsmittel über die Flüssigkeitsleitung 17 in das Innere des Reaktors 20 geleitet, während die aus der Umgebung angesaugte Luft (Leitung 4 in Figur 2) über die Zufuhrleitung 18 in den Reaktor 20 eingeleitet wird. Die Desorption kann auch mittels einer vorzugsweise einstufigen Flashkammer (d.h. einstufiger Flash-Verdampfer) erfolgen. Geeignet sind jedenfalls einer einfachen Trennstufe entsprechende verfahrenstechnische Einheiten.

Das erfindungsgemäß ausgestaltete Brennstoffzellensystem kann bei einem niedrigen Systemdruck betrieben werden. Zur Bereitstellung der im Reformierungsreaktor 1 und auf der Kathodenseite der Brennstoffzelle 11 benötigten Luft werden dadurch keine Kompressoren, sondern lediglich Lüfter benötigt (Lüfter in Leitung 4 sowie Lüfter 14 in Figur 2). Als Folge verbessert sich der parasitäre Wirkungsgrad und damit der Gesamtsystemwirkungsgrad.

Die Baugröße des Fahrzeugkühlers verringert sich, da die sonst über diesen abzuführende Kondensationswärme im System bleibt.

Schließlich wird das Wasser im Absorptionsmittel gespeichert, weshalb es auch bei niedrigen Außentemperaturen nicht zu Problemen hinsichtlich der Frostsicherheit kommt.

Die Erfindung ermöglicht den Betrieb eines Brennstoffzellensystems mit Reformierung von Kohlenwasserstoffen und/oder Alkoholen unter nahezu vollständiger Rückgewinnung des Prozeßwassers, so daß beim mobilen Einsatz auf eine Wasserbetankung weitestgehend verzichtet werden kann.

## Patentansprüche

1. Verfahren zum Betrieb eines Brennstoffzellensystems (11), bei dem im Abluftstrom des Brennstoffzellensystems (11) enthaltenes Wasser rückgewonnen wird,
**dadurch gekennzeichnet,**
**daß** das im feuchten Abluftstrom enthaltene Wasser mittels Absorption aus diesem entfernt und anschließend durch Desorption wieder freigesetzt und zumindest teilweise dem Brennstoffzellensystem (11) zugeführt wird.

2. Verfahren nach Anspruch 1, **dadurch gekennzeichnet, daß** als Absorptionsmittel Glykol, insbesondere Diethylenglykol, eingesetzt wird.

3. Verfahren nach Anspruch 1 oder 2, **dadurch gekennzeichnet, daß** die Desorption mittels Luft erfolgt, die durch das mit Wasser beladene Absorptionsmittel geleitet wird.

4. Verfahren nach einem der Ansprüche 1 bis 3, **dadurch gekennzeichnet, daß** das desorbierte Wasser einer Reformierungsstufe für Kohlenwasserstoffe und/oder Alkohole zugeführt wird, die Wasserstoff als Brennmittel des Brennstoffzellensystems (11) erzeugt.

5. Verfahren nach einem der Ansprüche 1 bis 4, **dadurch gekennzeichnet, daß** Absorption und Desorption ein- oder mehrstufig erfolgen.

6. Verfahren nach einem der Ansprüche 1 bis 5, dadurch gekennzeichent, daß Absorption und Desorption kontinuierlich in einer kombinierten Absorptions-/Desorptionseinheit vorgenommen werden.

7. Verfahren nach einem der Ansprüche 1 bis 6, **dadurch gekennzeichnet, daß** zur Absorption und/oder zur Desorption ein Zentrifugalreaktor (20) verwendet wird, in dem das Absorptionsmittel und der feuchte Abluftstrom des Brennstoffzellensystems (11) bzw. ein Desorptionsmittel, wie trockene heiße Luft, im Gegenstrom zueinander geführt werden.

8. Brennstoffzellensystem (11) mit einer Einrichtung zur Rückgewinnung des im Abluftstrom des Brennstoffzellensystems enthaltenen Wassers,
**dadurch gekennzeichnet,**
**daß** die Einrichtung zur Rückgewinnung des im Abluftstrom des Brennstoffzellensystems enthaltenen Wassers aus einer Absorptionseinheit (15) und einer Desorptionseinheit (16) besteht, wobei die Absorptionseinheit (15) in den Abluftstrom des Brennstoffzellensystems (11) geschaltet ist, und die Desorptionseinheit (16) mit dem Brennstoffzellensystem (11) zur wenigstens teilweisen Rückführung des desorbierten Wassers verbunden ist.

9. Brennstoffzellensystem nach Anspruch 8, **dadurch gekennzeichnet, daß** die Desorptionseinheit (16) mit einer dem Brennstoffzellensystem (11) vorgeschalteten Reformierungsstufe (1,2,...,9) für Kohlenwasserstoffe und/oder Alkohole zur Rückführung des desorbierten Wassers verbunden ist.

10. Brennstoffzellensystem nach Anspruch 8 oder 9, **dadurch gekennzeichnet, daß** Absorptions- und Desorptionseinheit (15,16) ein- oder mehrstufig ausgebildet sind.

11. Brennstoffzellensystem nach einem der Ansprüche 8 bis 10, **dadurch gekennzeichnet, daß** zur Rückgewinnung des im Abluftstrom des Brennstoffzellensystems (11) enthaltenen Wassers eine kombinierte Absorptions-/Desorptionseinheit (15,16) mit dem Brennstoffzellensystem (11) derart verbunden ist, daß durch Rotation der kombinierten Absorptions-/Desorptionseinheit (15,16) oder durch zyklisches Umschalten der Zu- und Ableitungen zu bzw. von dieser Einheit ein kontinuierlicher oder getakteter Absorptions- und Desorptionsvorgang möglich ist.

12. Brennstoffzellensystem nach einem der Ansprüche 8 bis 11, **dadurch gekennzeichnet, daß** die Absorptions- und/oder die Desorptionseinheit (15,16) ein Zentrifugalreaktor (20) ist, der Zuführungen (17,18) für ein Absorptionsmittel und für den Abluftstrom des Brennstoffzellensystems bzw. für ein Desorptionsmittel, wie trockene heiße Luft, aufweist, wobei die Stoffströme jeweils im Gegenstrom durch den Zentrifugalreaktor (20) verlaufen.
